# EUROPÄISCHE PATENTSCHRIFT

(11) **EP 0 908 344 B1**
(45) Veröffentlichungstag und Bekanntmachung des Hinweises auf die Patenterteilung: **17.04.2002**
(21) Anmeldenummer: 98118610.9
(22) Anmeldetag: 01.10.1998
(51) Int. Cl.: B60K 11/04

(54) **Elastische Abstützung eines Wärmetauschers für eine Brennkraftmaschine, insbesondere in einem Kraftfahrzeug**
Elastic support of a heat exchanger for a combustion engiene, especially in a motor vehicle
Support élastique d'un échangeur de chaleur pour un moteur à combustion interne, notamment dans un véhicule automobile

(30) Priorität: 07.10.1997 DE 19744173
(43) Veröffentlichungstag der Anmeldung: 14.04.1999
(73) Patentinhaber: ADAM OPEL AG, 65423 Rüsselsheim (DE)
(72) Erfinder: Böke, Rainer Dipl.-Ing., 59581 Warstein (DE)
(74) Vertreter: Kümpfel, Heinz, Dipl.-Ing.

(56) Entgegenhaltungen:
- DE-A- 3 613 955
- US-A- 4 506 419
- US-A- 5 544 714

## Beschreibung

Die Erfindung betrifft eine Abstützung eines Wärmetauschers für eine Brennkraftmaschine gemäß dem Oberbegriff des Patentanspruches 1.

Eine derartige Abstützung ist z. B. mit DE 36 13 955 beschrieben. Dabei ist der Wärmetauscher an seinem unteren als auch an seinem oberen Wasserkasten jeweils mit nach unten bzw. nach oben gerichteten Zapfen versehen, die von elastischen Buchsen umschlossen sind, welche in napfförmigen Vertiefungen gehalten werden. Diese Vertiefungen werden an der Unterseite des Wärmetauschers von tragenden Teilen der Fahrzeugkarosserie gebildet. An der Oberseite des Wärmetauschers sind die Vertiefungen als gesonderte an die tragende Struktur der Karosserie anschraubbare Teile ausgebildet, um eine Montage des Wärmetauschers zwischen den beiden tragenden Strukturteilen der Karosserie zu ermöglichen. Für diese bekannte Art der Befestigung eines Wärmetauschers sind somit zusätzliche Schrauben oder Bolzen sowie Schraubvorgänge für die Befestigung der die elastischen Buchsen an der Oberseite haltenden zusätzlichen Teile erforderlich.

Der Erfindung liegt die Aufgabe zugrunde, eine Abstützung der eingangs genannten Art zu schaffen, die ohne zusätzlich zu befestigende Halteteile für die elastischen Buchsen auskommt.

Diese Aufgabe wird erfindungsgemäß durch die Merkmale des Patentanspruches 1 gelöst. Vorteilhafte Weiterbildungen der Erfindung sind Gegenstand der Unteransprüche.

Bei einer elastischen Abstützung nach der Erfindung kann ein Wärmetauscher an seiner einen Seite, vorzugsweise der unteren Seite, in üblicher Weise mit seinen Zapfen in elastischen Buchsen aufgenommen sein, die in Vertiefungen liegen, welche von tragenden Karosserieteilen gebildet sind. Wird dann die an der anderen Seite, vorzugsweise der oberen Seite, befindliche Abstützung gemäß der Erfindung ausgeführt, dann können auch an dieser Seite die elastischen Buchsen von Vertiefungen in tragenden Karosserieteilen aufgenommen werden, ohne daß zusätzliche Befestigungsteile oder Montageoperationen erforderlich sind. Der Wärmetauscher wird bei der Montage in einer leicht gekippten Lage mit den an seinem Gehäuse befindlichen unteren Zapfen in die dafür vorgesehenen in üblicher Weise ausgeführten und gehalterten elastischen Buchsen an der Karosserie aufgesetzt. Infolge der leicht gekippten Lage liegen die oberen Zapfen vor den oberen gemäß der Erfindung ausgeführten elastischen Buchsen, die somit ebenfalls in von tragenden Karosserieteilen gebildeten Vertiefungen gehalten sind. Dabei sind die Buchsen in den Vertiefungen so ausgerichtet, daß die Ausnehmungen von Buchsen und Vertiefungen miteinander deckungsgleich sind. Beim Kippen des Wärmetauschers um die unten bereits festliegende Befestigung in seine Funktionslage gleitet jeder der oberen Zapfen radial durch die Ausnehmungen der Vertiefung und der Buchse. Wird nun die Buchse in ihrer napfartigen Vertiefung verdreht, z. B. um 90° um ihre Rotationsachse, dann ist der in ihrem Zentrum liegende Zapfen verriegelt. In dieser Stellung der Buchse gelangen die an der Buchse am Umfang angeformten Noppen bzw. Nuten infolge ihrer Elastizität in Eingriff mit der adäquat am inneren Umfang der Vertiefung befindlichen Gegenform. Die Buchse ist damit gegen ein selbsttätiges Verdrehen innerhalb der Vertiefung gesichert.

Mit einem geeigneten Werkzeug, welches an eine Werkzeughandhabe an der Buchse angreift, oder auch von Hand kann die Buchse gedreht werden. Sie kann bei Bedarf auch in ihre Montagestellung zurückgedreht werden, so daß sich die Verriegelung für den Zapfen löst und eine Demontage des Wärmetauschers möglich wird.

Ein Ausführungsbeispiel der Erfindung ist nachstehend anhand von Zeichnungen näher beschrieben. Es zeigen
- Fig. 1:: einen Wärmetauscher für eine Brennkraftmaschine zum Antrieb eines Kraftfahrzeuges;
- Fig. 2:: eine vergrößerte Darstellung eines oberen Befestigungspunktes des Wärmetauschers nach Figur 1 an einer Fahrzeugkarosserie;
- Fig. 3:: einen Befestigungspunkt nach Figur 2 mit einer elastischen Buchse in einem vereinfachten Schnitt;
- Fig. 4:: einen Schnitt entlang der Linie A - A in Figur 3 bei Einbaustellung der Buchse;
- Fig. 5:: einen Schnitt entlang der Linie A - A in Figur 3 bei Funktionsstellung der Buchse;
- Fig. 6:: die Buchse des Befestigungspunktes nach Figur 3 schräg von unten;
- Fig. 7: die Buchse des Befestigungspunktes nach Figur 3 schräg von oben.

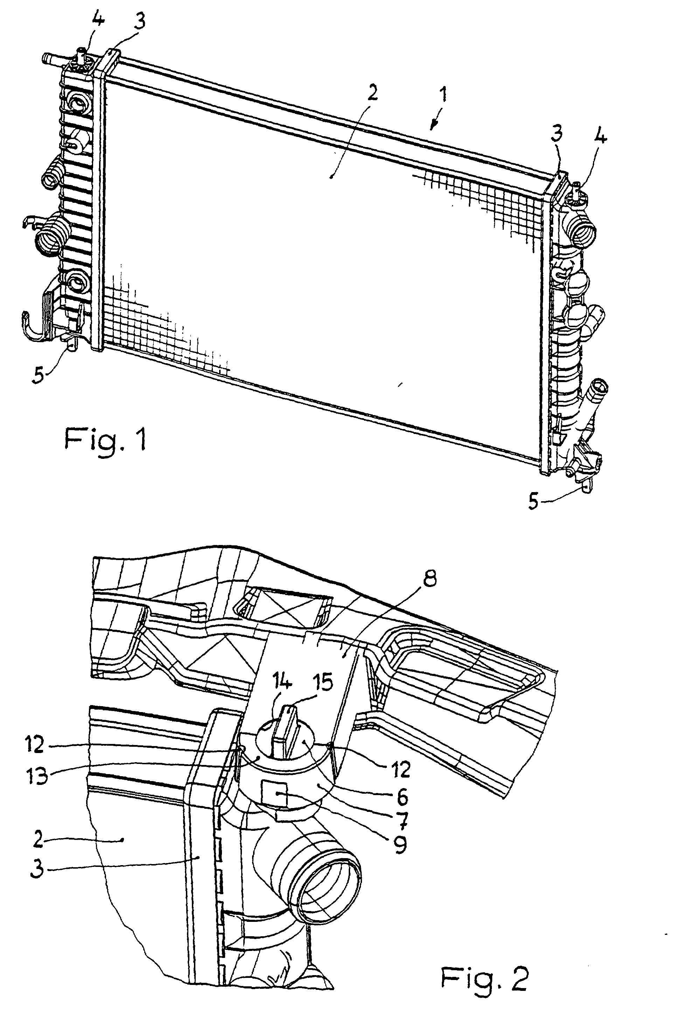

Figur 1 zeigt einen Wärmetauscher 1, der im wesentlichen aus einem Wärmetauschernetz 2 aus Rippen und Rohren sowie einem Wärmetauschergehäuse 3 besteht, welches das Wärmetauschernetz 2 beidseitig begrenzt. Am Wärmetauschergehäuse 3 befinden sich obere Zapfen 4 und untere Zapfen 5. Die unteren Zapfen 5 sind im eingebauten Zustand des Wärmetauschers 1 in üblicher und bekannter Weise von elastischen Buchsen umfangen, die an einem tragenden Teil einer Fahrzeugkarosserie in Vertiefungen abgestützt sind.

Die oberen Zapfen 4 sind jeweils von einer elastischen Buchse 6 umschlossen, die in einer,konisch ausgebildeten napfartigen Vertiefung 7 gehalten ist. Die napfartige Vertiefung wird durch ein tragendes Karosserieteil 8 gebildet. An der Stirnseite der Vertiefung 7 ist jeweils eine Ausnehmung 9 vorgesehen. Dieser Ausnehmung 9 am Umfang der Vertiefung 7 entsprechend befindet sich auch eine Ausnehmung 10 am Umfang der elastischen Buchse 6.

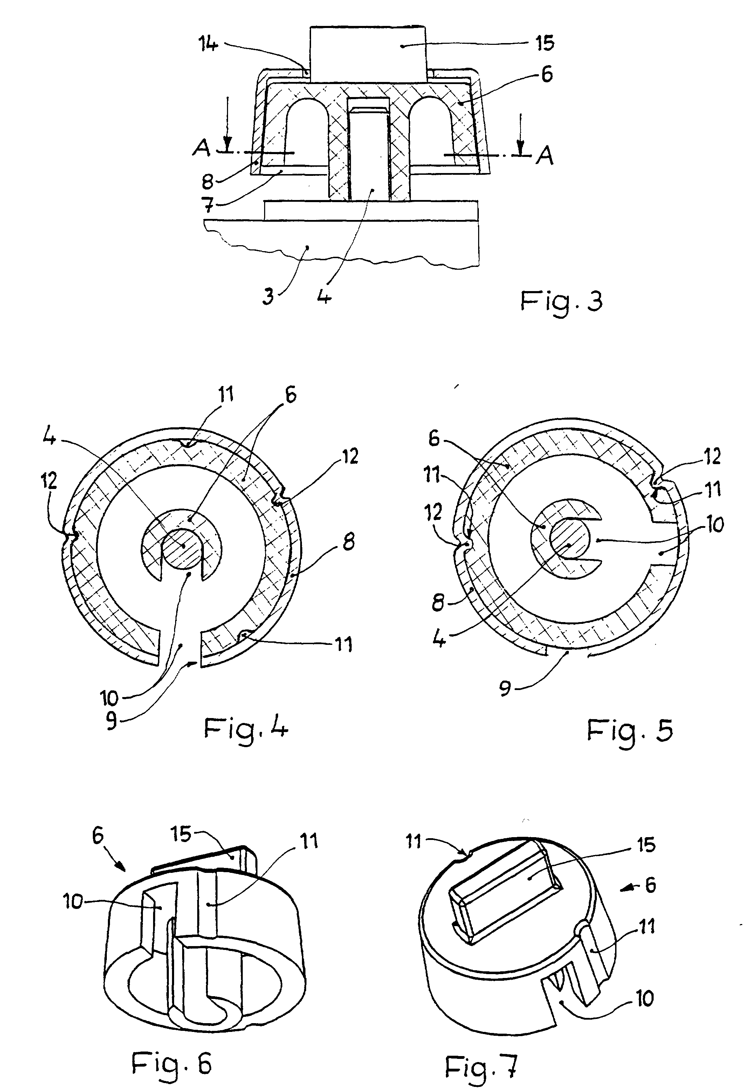

Am äußeren Umfang der Buchse 6 befinden sich parallel zur Mittelachse Nuten 11. Adäquat zu diesen Nuten 11 befinden sich am inneren Umfang der napfförmigen Vertiefung 7 Noppen 12. Die Noppen 12 und Nuten 11 sind so angebracht, daß sie miteinander in Eingriff gelangen, wenn sich die Buchse 6 in ihrer Funktionsstellung befindet (Figur 5). Die Vertiefung 7 weist in ihrem vom Wärmetauschergehäuse 3 abgewandten Boden 13 eine Öffnung 14 auf, durch welche eine Werkzeughandhabe 15 der Buchse 6 ragt.

Liegen die Ausnehmung 9 am Umfang der Vertiefung 7 und die Ausnehmung 10 am Umfang der Buchse deckungsgleich übereinander (Figur 4), dann kann der Zapfen 4 radial in das Zentrum der Buchse 6 eingeführt werden. Durch Verdrehen der Buchse 6 um 90° gelangt die Buchse 6 in ihre Funktionslage und der Zapfen 4 wird in seiner Lage mittig der Buchse 6 verriegelt. Gleichzeitig gelangen die Noppen 12 mit den Nuten 11 in Eingriff und sichern die Buchse 6 in ihrer Funktionslage gegen Verdrehen (Figur 5).

Der Wärmetauscher 1 kann somit an seinen Zapfen 4, 5 in elastischen Buchsen abgestützt werden, die alle in napfförmigen Vertiefungen unmittelbar an tragenden Karosserieteilen gehalten sind. Zusätzliche Befestigungselemente sind nicht erforderlich.

Durch eine spiegelbildliche Anordnung der elastischen Buchsen 6 am Wärmetauscher 1 wird die Position des Wärmetauschers im Fahrzeug eindeutig gesichert.

## Patentansprüche

1. Elastische Abstützung eines Wärmetauschers (1) für eine Brennkraftmaschine, insbesondere in einem Kraftfahrzeug, mit zumindest einem an einem Wärmetauschergehäuse (3) befindlichen zylindrischen Zapfen (4,5) und einer an einer Konsole der Fahrzeugstruktur in einer kreisrunden napfförmigen Vertiefung formschlüssig gehaltenen elastischen Buchse (6), welche den Zapfen (4,5) mit einer zylindrischen Aufnahmeöffnung konzentrisch umschließt, **dadurch gekennzeichnet, daß** am Umfang der napfförmigen Vertiefung (7) und am Umfang der elastischen Buchse (6) vom benachbarten Wärmetauschergehäuse (3) ausgehend jeweils eine Ausnehmung (9, 10) vorgesehen ist, welche der Silhouette des Zapfens (4) entspricht, die Ausnehmung (9) der napfförmigen Vertiefung (7) sowie die Ausnehmung (10) der Buchse (6) zum radialen Einsetzen des Zapfens (4) in die Aufnahmeöffnung der Buchse (6) in eine deckungsgleiche Lage bringbar sind und die Buchse (6) in der Vertiefung (7) aus der Lage mit deckungsgleichen Ausnehmungen (9, 10) in eine Gebrauchslage verdrehbar ist.

2. Elastische Abstützung nach Anspruch 1, **dadurch gekennzeichnet, daß** am inneren Umfang der napfförmigen Vertiefung (7) Noppen oder Nuten (12) und am äußeren Umfang der elastischen Buchse (6) adäquate Nuten oder Noppen (11) vorgesehen sind, die bei Gebrauchslage der Buchse (6) miteinander in Eingriff stehen und so ein Verdrehen der Buchse (6) in der Vertiefung (7) verhindern.

3. Elastische Abstützung nach Anspruch 1 und 2, **dadurch gekennzeichnet, daß** der vom Wärmetauschergehäuse (3) abgewandte Boden (13) der napfförmigen Vertiefung (7) eine Öffnung (14) aufweist, durch welche die in der Vertiefung (7) befindliche Buchse (6) erfaßbar und so verdrehbar ist.

4. Elastische Abstützung nach Anspruch 3, **dadurch gekennzeichnet, daß** durch die Öffnung (14) am Boden (13) der napfförmigen Vertiefung (7) eine mit der Buchse (6) verbundene Werkzeughandhabe (15) ragt.

## Claims

1. Resilient support for a heat exchanger (1) for an internal combustion engine, in particular in a motor vehicle, with at least one cylindrical pin (4, 5) located on a heat exchanger housing (3) and with a resilient bush (6) which is held in form-locking relationship in a round cup-shaped depression on a bracket of the vehicle structure and which concentrically surrounds the pin (4, 5) with a cylindrical receiving opening, **characterised in that** at the circumference of the cup-shaped depression (7) and at the circumference of the resilient bush (6), starting from the adjacent heat exchanger housing (3), there is provided in each case a recess (9, 10) which corresponds to the silhouette of the pin (4), the recess (9) of the cup-shaped depression (7) and the recess (10) of the bush (6) can be brought into a position of register for radial insertion of the pin (4) in the receiving opening of the bush (6), and the bush (6) is rotatable in the depression (7) out of the position with the recesses (9, 10) in register into a working position.

2. Resilient support according to claim 1, **characterised in that** at the inner circumference of the cup-shaped depression (7) are provided knobs or grooves (12) and at the outer circumference of the resilient bush (6) are provided matching grooves or knobs (11), which engage with each other in the working position of the bush (6) and so prevent rotation of the bush (6) in the depression (7).

3. Resilient support according to claims 1 and 2, **characterised in that** the bottom (13) of the cup-shaped depression (7) facing away from the heat exchanger housing (3) comprises an opening (14) through which the bush (6) located in the depression (7) can be gripped and thus rotated.

4. Resilient support according to claim 3, **characterised in that** through the opening (14) at the bottom (13) of the cup-shaped depression (7) extends a tool handle (15) connected to the bush (6).

## Revendications

1. Support élastique pour un échangeur de chaleur (1) pour un moteur à combustion interne, en particulier d'un véhicule automobile, comportant au moins un tourillon (4, 5) cylindrique prévu sur un corps (3) d'échangeur de chaleur et un bouton (6) élastique qui est tenu par complémentarité de formes dans une cavité circulaire, en forme de cuvette, aménagée dans un élément de la structure de véhicule, qui entoure de manière concentrique le tourillon (4, 5) avec un logement cylindrique, **caractérisé en ce qu'**il est prévu sur le pourtour de la cavité (7) en forme de cuvette et sur le pourtour du bouton (6) élastique, à partir de l'échangeur de chaleur (3) voisin, une échancrure (9, 10) dont la forme est adaptée au tourillon, **en ce que** l'échancrure (9) de la cavité (7) en forme de cuvette et l'échancrure (10) du manchon (6) peuvent être amenées dans une position d'alignement pour l'engagement du tourillon (4) dans le logement du bouton (6) et **en ce que** le bouton (6) à l'intérieur de la cavité (7) peut être amené par rotation de la position d'alignement mutuel des échancrures (9, 10) dans une position d'utilisation.

2. Support élastique selon la revendication 1, **caractérisé en ce qu'**il est prévu sur le pourtour intérieur de la cavité (7) en forme de cuvette des saillies ou des rainures (12) et sur le pourtour extérieur du bouton (6) élastique, des rainures ou des saillies (11) adaptées qui, dans la position d'utilisation du bouton (6) sont en prise mutuelle et empêchent la rotation dudit bouton (6) dans la cavité (7).

3. Support élastique selon les revendications 1 et 2, **caractérisé en ce que** le fond (13) de la cavité (7), éloigné du corps d'échangeur de chaleur (3) présente une ouverture (14) à travers laquelle on peut accéder au bouton (6) logé dans la cavité (7) et le tourner.

4. Support élastique selon la revendication 3, **caractérisé en ce qu'**un élément de prise (15) prévu sur le bouton (6) fait saillie à travers l'ouverture (14), dans le fond de la cavité (7) en forme de cuvette.
